# DEMANDE DE BREVET EUROPEEN

(11) **EP 4 520 970 A1**
(43) Date de publication de la demande: **12.03.2025**
(21) Numéro de dépôt: 24196055.8
(22) Date de dépôt: 23.08.2024
(51) Int. Cl.: F04B 43/04, F04B 43/06, F16K 99/00

(54) **DISPOSITIF MICROFLUIDIQUE DE TYPE VANNE OU POMPE**

(30) Priorité: 06.09.2023 FR 2309391
(71) Demandeur: Commissariat à l'Energie Atomique et aux Energies Alternatives, 75015 Paris (FR)
(72) Inventeur: BOIZOT, François, 38054 Grenoble cedex 09 (FR)
(74) Mandataire: INNOV-GROUP

(57) **Abrégé**

L'invention concerne un dispositif microfluidique comportant un support (10) comprenant une face dite supérieure et une face opposée, dite inférieure, ledit support (10) comportant une cavité, ladite cavité étant séparée en deux espaces distincts délimités de manière étanche par un élément déformable (12), un premier espace (13) fermé, dit supérieur, dans lequel débouche un premier canal microfluidique (15), et un deuxième espace (14) fermé, dit inférieur, dans lequel débouchent un deuxième canal microfluidique (16) et un troisième canal microfluidique (17), l'actionnement de l'élément déformable (12) entre au moins deux positions venant moduler le rapport de volume entre le premier espace (13) et le deuxième espace (14), caractérisé en ce que ledit élément déformable (12) est formé par la paroi de fond (120) d'un trou (20) borgne réalisé dans ledit support (10).

## Description

### Domaine technique de l'invention

La présente invention se rapporte à un dispositif microfluidique de type vanne ou pompe.

### Etat de la technique

Il est connu des documents US2012/064597A1**,** US2013/130262A1**,** US2007/166199A1 et US2006/076068A1 des dispositifs micro-fluidiques formés d'un réseau micro-fluidique d'éléments microfluidiques et de canaux reliant les éléments microfluidiques entre eux. Parmi ces éléments microfluidiques, il existe les vannes microfluidiques réalisées sous la forme de capsules microfluidiques.

Une vanne micro-fluidique de ce type comporte une chambre dans laquelle débouche un canal d'entrée et dont ressort un canal de sortie. Une membrane déformable est commandée entre deux positions pour conférer deux états distincts à la capsule, un premier état dans lequel le canal d'entrée communique avec le canal de sortie via la chambre autorisant un transfert de fluide, et un deuxième état dans lequel la membrane bloque la communication entre les deux canaux, empêchant l'écoulement de fluide et le remplissage de la chambre de la capsule. La commande de la membrane entre ses deux états sera par exemple réalisée à l'aide de moyens pneumatiques, par exemple en exerçant sur elle une pression positive ou une pression négative. Pour réaliser ces dispositifs, les solutions connues sont réalisées par un assemblage multicouche dans lequel la membrane déformable forme une couche intermédiaire prise entre deux cartes ou couches. La membrane est souvent collée ou fixée par de l'adhésif double-face prédécoupé.

Actuellement la membrane déformable est souvent réalisée dans un matériau hyperélastique à base de silicone, tel que le polydiméthylsiloxane (PDMS), ou d'élastomère comme l'Ecoflex (marque déposée).

Cependant, l'étanchéité de la vanne microfluidique au niveau de la membrane n'est pas toujours facile à obtenir et génère beaucoup de contraintes.

Le brevet US5542821**,** la demande de brevet US2012/273077A1 et le brevet US8016260B2 présentent des solutions de vanne fluidique utilisant des matériaux de type élastomère, ou des matériaux rigides comme le métal ou la céramique. Ces solutions de vanne ne sont pas adaptées pour des dispositifs dont le support est réalisé en Cyclo-Oléfine Polymère (COP) ou Cyclo-Oléfine Copolymère (COC).

Il existe donc un besoin de disposer d'un d'une vanne microfluidique présentant une architecture adaptée pour pallier les inconvénients des solutions antérieures connues.

### Exposé de l'invention

Ce but est atteint par un dispositif microfluidique comportant un support réalisé en Cyclo-Oléfine Polymère ou Cyclo-Oléfine Copolymère, ledit support comprenant une face dite supérieure et une face opposée, dite inférieure, ledit support comportant une cavité, ladite cavité étant séparée en deux espaces distincts délimités de manière étanche par un élément déformable, un premier espace fermé, dit supérieur, dans lequel débouche un premier canal microfluidique, et un deuxième espace fermé, dit inférieur, dans lequel débouchent un deuxième canal microfluidique et un troisième canal microfluidique, l'actionnement de l'élément déformable entre au moins deux positions venant moduler le rapport de volume entre le premier espace et le deuxième espace, ledit élément déformable étant formé par la paroi de fond d'un trou borgne réalisé dans ledit support.

Selon une première réalisation, ledit élément déformable présente une forme de calotte hémisphérique dans une première position dite de repos, ladite calotte étant proéminente dans le premier espace, ladite calotte hémisphérique étant apte à être déformée vers une deuxième position plate pour obturer le deuxième canal microfluidique et le troisième canal microfluidique. Dans cette première réalisation, le dispositif fonctionne comme une vanne microfluidique.

Selon une deuxième réalisation, ledit élément déformable présente une forme de calotte hémisphérique dans une première position dite de repos, ladite calotte étant proéminente dans le deuxième espace pour obturer le deuxième canal microfluidique et le troisième canal microfluidique, ladite calotte hémisphérique étant apte à être déformée vers une deuxième position plate pour pomper un fluide dans le deuxième espace à travers le deuxième canal microfluidique. Dans cette deuxième réalisation, le dispositif fonctionne comme une pompe microfluidique.

Selon une autre particularité, le premier espace est fermé par le dessus par une couche supérieure déposée contre la face supérieure du support.

Selon une autre particularité, le deuxième espace est fermé par le dessous par une couche inférieure déposée contre la face inférieure du support.

Selon une autre particularité, la paroi de fond présente une épaisseur de matière comprise entre 40µm et 120µm.

Selon une autre particularité, le trou borgne présente un diamètre compris entre 4mm et 10mm.

Selon une autre particularité, le support présente une épaisseur comprise entre 4mm et 10mm.

L'invention concerne également un procédé de fabrication d'un dispositif microfluidique tel que défini ci-dessus, ledit dispositif microfluidique comprenant un support réalisé en Cyclo-Oléfine Polymère ou Cyclo-Oléfine Copolymère et doté de deux faces opposées séparées d'une épaisseur constante et dites face supérieure et face inférieure, ledit procédé étant caractérisé en ce qu'il comporte les étapes suivantes :
- Réalisation d'un trou borgne dans ledit support, sur sa face supérieure, sur une profondeur suffisante pour laisser une paroi de fond, ladite paroi de fond se déformant vers le dessus pour former une calotte hémisphérique délimitant un premier espace et un deuxième espace,
- Application d'une couche supérieure sur la face supérieure du support pour fermer ledit premier espace,
- Application d'au moins une couche inférieure sur la face inférieure du support pour fermer ledit deuxième espace,
- Créer un canal d'actionnement découchant dans l'espace supérieur ou dans l'espace inférieur et créer deux canaux microfluidiques débouchant respectivement tous les deux dans l'espace inférieur ou dans l'espace supérieur.

Selon une autre particularité, le trou borgne est réalisé sur une profondeur choisie de manière à laisser la paroi de fond avec une épaisseur de matière comprise entre 40µm et 120µm.

Selon une autre particularité, le trou borgne présente un diamètre compris entre 4mm et 10mm.

Selon une autre particularité, le support présente une épaisseur comprise entre 4mm et 10mm.

### Brève description des figures

D'autres caractéristiques et avantages vont apparaître dans la description détaillée qui suit faite en regard des dessins annexés dans lesquels :
- Les figures 1A et 1B montrent l'architecture du dispositif microfluidique de l'invention fonctionnant comme vanne microfluidique et illustrent son principe de fonctionnement ;
- Les figures 2A à 2C montrent l'architecture du dispositif microfluidique de l'invention fonctionnant comme pompe microfluidique et illustrent son principe de fonctionnement ;

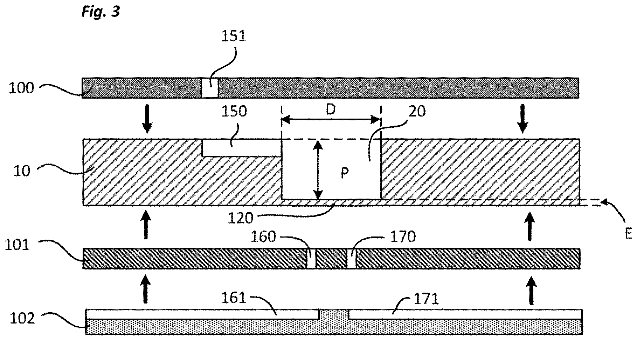

- La figure 3 montre un exemple d'un procédé de fabrication du dispositif microfluidique de type vanne microfluidique ;

### Description détaillée d'au moins un mode de réalisation

Pour la suite de la description, on définit un repère orthonormé X, Y, Z. Les termes "sur", "sous", "supérieur", "inférieur", "au-dessus", "au-dessous" ou équivalents sont à considérer en prenant comme référence l'axe Z du repère, tracé verticalement.

L'invention concerne un dispositif microfluidique, pouvant fonctionner comme vanne microfluidique ou comme pompe microfluidique.

Une telle vanne microfluidique ou pompe microfluidique est souvent utilisée dans une carte microfluidique 1.

Une carte microfluidique 1 est notamment employée dans le domaine médical pour analyser un fluide, tel qu'un échantillon liquide (du sang par exemple) en venant se connecter sur un automate d'analyse. La carte peut ainsi intégrer tout un réseau microfluidique composé d'éléments microfluidiques tels que des vannes, des chambres et des canaux microfluidiques.

Une carte microfluidique est souvent réalisée par l'assemblage de plusieurs couches entre elles selon la direction Z. Ses couches sont par exemple assemblées entre elles par scellement thermique. Chaque couche peut être usinée de manière à y créer une partie du réseau microfluidique de la carte.

Une telle carte 1 présente par exemple une épaisseur comprise entre 2mm et 12mm.

Un dispositif de type vanne microfluidique est positionné entre au moins deux canaux microfluidiques, et a pour fonction d'autoriser le passage du fluide d'un premier canal microfluidique vers un deuxième canal microfluidique ou de bloquer le passage du fluide du premier canal microfluidique vers le deuxième canal microfluidique.

La vanne présente ainsi deux états :
- Un état ouvert dans lequel elle autorise le passage du fluide ;
- Un état fermé dans lequel elle bloque le passage du fluide ;

Un dispositif microfluidique de type pompe microfluidique est chargé de pomper un fluide par aspiration, vers l'intérieur de sa cavité par un premier canal microfluidique et de le repousser dans un autre canal microfluidique.

Le fluide peut être un liquide ou un gaz.

Sur les figures annexées, la carte microfluidique 1 est montrée partiellement, de manière à ne représenter que le dispositif microfluidique objet de l'invention.

### Vanne microfluidique - Architecture

Figure 1A
Figure 1B

Selon l'invention, la vanne microfluidique est réalisée dans la carte microfluidique 1. La carte microfluidique 1 est avantageusement réalisée dans un matériau de type COP (Cyclo-Oléfine Polymère) ou COC (Cyclo-Oléfine Copolymère). D'autres matériaux ayant des caractéristiques équivalentes pourraient bien entendu être employés.

La carte microfluidique 1 comporte un support microfluidique 10 formant l'une de ses couches. Le support 10 comporte deux faces opposées, s'étendant chacune dans les deux dimensions X, Y et présente une épaisseur faible (quelques mm) suivant Z au regard des deux autres dimensions.

Le support 10 comporte également une cavité 11. Cette cavité 11 est divisée en deux espaces distincts selon la direction Z, séparés entre eux par un élément déformable 12. L'élément déformable 12 sépare le premier espace 13 du deuxième espace 14 de manière complètement étanche.

Le premier espace 13 est par exemple situé au-dessus de l'élément déformable 12 et le deuxième espace 14 est par exemple situé au-dessous de l'élément déformable 12 (selon Z).

Pour former l'élément déformable 12, un trou borgne (non débouchant) est réalisé dans le support (suivant Z). Le fond de ce trou borgne constitue ainsi une paroi du support et forme l'élément déformable.

L'élément est dit déformable car il est susceptible de se déformer entre au moins deux positions, sous l'effet d'une contrainte mécanique. Le rapport de volume entre le premier espace 13 et le deuxième espace 14 varie ainsi en fonction de la position prise par l'élément déformable 12 lors de son actionnement.

L'élément déformable 12 peut prendre deux positions distinctes, une première position, dite de repos, dans laquelle il forme une calotte hémisphérique orientée vers l'intérieur du premier espace 13 et une deuxième position, dite actionnée, dans laquelle il est rabattu et vient former une paroi plane située dans un plan parallèle aux axes X, Y.

Le premier espace 13 est fermé par le dessus en déposant une première couche 100 de matière sur la face supérieure du support 10.

Un canal d'actionnement 15 est réalisé dans la carte microfluidique, ce canal d'actionnement débouchant d'un côté dans le premier espace 13 et de l'autre côté sur l'extérieur de manière à pouvoir être connecté sur un système d'actionnement pneumatique A.

Le deuxième espace 14 est fermé en appliquant deux autres couches 101, 102 de matière sur la face inférieure du support 10.

Un premier canal microfluidique 16 et un deuxième canal microfluidique 17 sont réalisés dans la carte 1 et sont intégrés au réseau microfluidique de la carte. Ils débouchent chacun dans le deuxième espace 14. Les deux canaux sont employés pour faire circuler le fluide dont le déplacement est contrôlé par la vanne. Ces deux canaux microfluidiques sont par exemple agencés de manière à déboucher dans le deuxième espace 14 suivant la direction Z. Ils forment ainsi par exemple un coude à leur extrémité.

En fonctionnement :

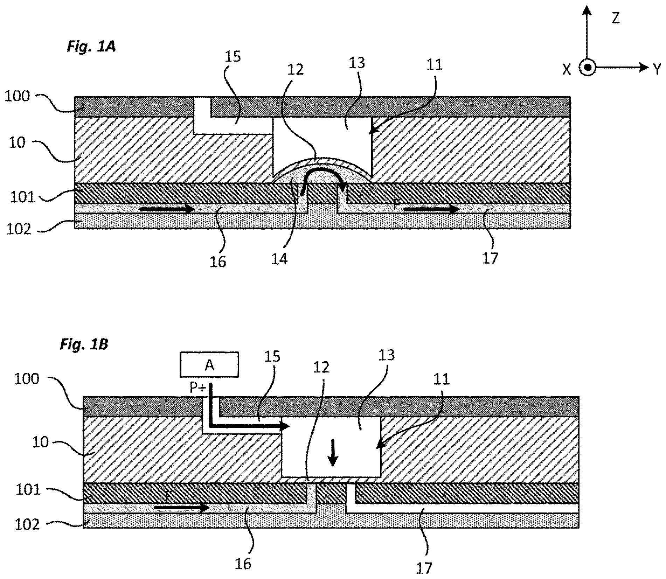

- Figure 1A : Lorsque l'élément déformable 12 est dans sa position de repos, sa forme bombée libère l'accès aux deux canaux microfluidiques 16, 17, autorisant le fluide F à passer du premier canal microfluidique 16 au deuxième canal microfluidique 17 via le deuxième espace 14. La vanne microfluidique est ainsi à l'état ouvert.
- Figure 1B : En injectant un gaz (par exemple de l'air) à travers le canal d'actionnement 15 à l'aide du système d'actionnement pneumatique A, on vient appliquer une pression P+ dans le premier espace 13. Au-delà d'une certaine pression, l'élément déformable 12 se déforme jusqu'à prendre sa deuxième position actionnée. Dans cette deuxième position actionnée, l'élément déformable 12 vient se plaquer contre les accès des canaux microfluidiques 16, 17 et les obturer, empêchant le passage du fluide F d'un canal vers l'autre via le deuxième espace 14.
- Lorsque la pression est relâchée dans le premier espace 13, l'élément déformable 12 revient automatiquement, par effet élastique, vers sa position de repos.

On constate que la vanne microfluidique de l'invention est une vanne de type monostable normalement ouverte.

### Pompe microfluidique - Architecture

Figure 2A
Figure 2B
Figure 2C

Dans une autre configuration, on peut imaginer utiliser le dispositif microfluidique comme pompe microfluidique.

La configuration est identique à celle de la vanne microfluidique, à l'exception que le fonctionnement est inversé par rapport à celui de la vanne. L'élément déformable 12 est bombé vers l'intérieur du deuxième espace 14. Autrement dit, on applique désormais une dépression (P-) à travers le canal d'actionnement 15 pour déformer l'élément déformable 12 et le ramener vers l'intérieur du premier espace 13 et réduire le volume du premier espace 13. En outre, dans cette version, de manière non limitative, le premier espace 13 est par exemple fermé par le dessus par deux couches 103, 104, pour former le canal d'actionnement 15.

En fonctionnement :

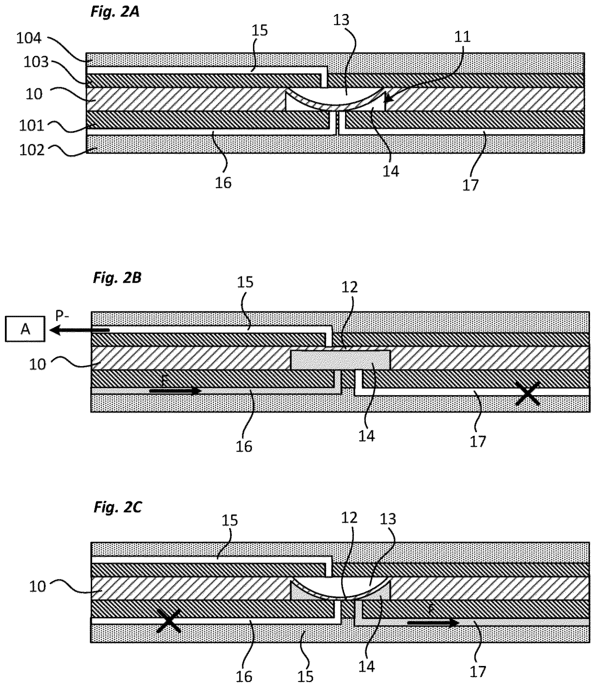

- Figure 2A : Lorsque l'élément déformable 12 est dans sa position de repos, sa forme bombée vient obturer les deux canaux microfluidiques 16, 17 débouchant dans le deuxième espace 14, empêchant le fluide F de gagner le deuxième espace 14 ;
- Figure 2B : En appliquant une dépression P- dans le premier espace 13 à travers le canal d'actionnement 15 à l'aide du système d'actionnement pneumatique A, on vient déformer l'élément déformable 12 vers sa position actionnée plate. On vient ainsi pomper le fluide F à travers le premier canal microfluidique 16 vers l'intérieur du deuxième espace 14, le premier canal microfluidique 16 étant dans un état ouvert et le deuxième canal microfluidique 17 dans un état fermé (marqué par une croix).
- Figure 2C : Lorsque la dépression P- est relâchée dans le premier espace 13, l'élément déformable 12 revient automatiquement, par effet élastique, dans sa position de repos bombée et repousse le fluide F à travers le deuxième canal microfluidique 17, le premier canal microfluidique 16 étant alors dans un état fermé (marqué par une croix) et le deuxième canal microfluidique 17 dans un état ouvert de manière à autoriser l'expulsion du fluide F en dehors du deuxième espace 14.

Dans cette réalisation, on peut noter que la profondeur du trou 20 borgne réalisé doit être adaptée pour que le sommet de la calotte hémisphérique au repos vienne au moins à fleur de la face supérieure du support 10 et même avantageusement soit saillant au-dessus du plan formé par la face inférieure du support 10, ceci de manière à ce que l'élément déformable vienne bien se plaquer contre la couche inférieure 101 et contre l'embouchure des deux canaux microfluidiques 16, 17 pour garantir leur obturation.

### Vanne microfluidique - Fabrication

### Figure 3

De manière non limitative, le dispositif est fabriqué par la superposition de plusieurs couches entre elles.

La couche centrale est formée du support 10 tel que décrit ci-dessus. Le support 10 présente une épaisseur constante. Il est choisi dans un matériau tel que le COP ou le COC.

Un trou 20 borgne est percé suivant Z sur la face supérieure du support 10. Le trou 20 est creusé sur une profondeur P suffisante de manière à ne laisser qu'une fine paroi de fond, par exemple d'une épaisseur E comprise entre 40µm et 120µm. Le trou 20 présente avantageusement une section circulaire de diamètre D choisi compris entre 4mm et 10mm. De manière naturelle, la paroi de fond 120 forme alors une calotte hémisphérique dont le sommet est orienté vers le haut. La calotte délimitera ainsi le premier espace 13 situé au-dessus et le deuxième espace 14 situé au-dessous selon la direction Z.

Une cavité 150 est réalisée sur la face supérieure du support, cette cavité servant à préformer le canal d'actionnement débouchant dans le premier espace.

On dépose la couche supérieure 100 sur la face supérieure du support 10, de manière à fermer le premier espace 13 par le dessus et on applique les deux couches inférieures 101, 102 sur la face inférieure du support 10 pour fermer le deuxième espace 14 par le dessous.

La couche supérieure 100 est préalablement usinée d'un trou traversant 151 de manière à créer l'entrée du canal d'actionnement 15.

De même les deux couches inférieures 101, 102 sont préalablement usinées de manière à former les deux canaux microfluidiques 16, 17. La couche inférieure 102 peut être usinée sur sa face supérieure pour former deux cavités 161, 171. La couche inférieure 101 peut être usinée de deux trous traversants 160, 170 pour former les deux accès destinés à déboucher dans le deuxième espace 14.

Le même principe de fabrication s'applique pour un dispositif microfluidique de type pompe, le montage étant juste inversé.

Dans les deux réalisations décrites ci-dessus, il est possible de venir ajouter un organe en matériau souple, tel que caoutchouc ou équivalent, sur l'élément déformable 12, sur sa surface venant en contact avec les canaux microfluidiques, de manière à créer un joint et à améliorer l'étanchéité de la fermeture des canaux.

La solution de l'invention présente ainsi de nombreux avantages, parmi lesquels :
- Elle permet de s'affranchir de l'intégration d'une couche supplémentaire, de type membrane déformable dans une carte microfluidique ;
- Elle permet de résoudre les problèmes d'étanchéité existant habituellement avec les membranes déformables, puisqu'aucune pièce supplémentaire n'a besoin d'être intégrée ;
- Elle est facile à mettre en oeuvre et à fabriquer ;

## Revendications

1. Dispositif microfluidique comportant un support (10) réalisé en Cyclo-Oléfine Polymère ou Cyclo-Oléfine Copolymère, ledit support (10) comprenant une face dite supérieure et une face opposée, dite inférieure, ledit support (10) comportant une cavité, ladite cavité étant séparée en deux espaces distincts délimités de manière étanche par un élément déformable (12), un premier espace (13) fermé, dit supérieur, dans lequel débouche un premier canal microfluidique (15), et un deuxième espace (14) fermé, dit inférieur, dans lequel débouchent un deuxième canal microfluidique (16) et un troisième canal microfluidique (17), l'actionnement de l'élément déformable (12) entre au moins deux positions venant moduler le rapport de volume entre le premier espace (13) et le deuxième espace (14), **caractérisé en ce que** ledit élément déformable (12) est formé par la paroi de fond (120) d'un trou (20) borgne réalisé dans ledit support (10).

2. Dispositif selon la revendication 1, **caractérisé en ce que** ledit élément déformable (12) présente une forme de calotte hémisphérique dans une première position dite de repos, ladite calotte étant proéminente dans le premier espace (13), ladite calotte hémisphérique étant apte à être déformée vers une deuxième position plate pour obturer le deuxième canal microfluidique (16) et le troisième canal microfluidique (17).

3. Dispositif selon la revendication 1, **caractérisé en ce que** ledit élément déformable présente une forme de calotte hémisphérique dans une première position dite de repos, ladite calotte étant proéminente dans le deuxième espace (14) pour obturer le deuxième canal microfluidique (16) et le troisième canal microfluidique (17), ladite calotte hémisphérique étant apte à être déformée vers une deuxième position plate pour pomper un fluide dans le deuxième espace (14) à travers le deuxième canal microfluidique (16).

4. Dispositif selon l'une des revendications 1 à 3, **caractérisé en ce que** le premier espace (13) est fermé par le dessus par une couche supérieure (100) déposée contre la face supérieure du support (10).

5. Dispositif selon l'une des revendications 1 à 4, **caractérisé en ce que** le deuxième espace (14) est fermé par le dessous par une couche inférieure (101) déposée contre la face inférieure du support (10).

6. Dispositif selon l'une des revendications 1 à 5, **caractérisé en ce que** la paroi de fond présente une épaisseur de matière comprise entre 40µm et 120µm.

7. Dispositif selon l'une des revendications 1 à 6, **caractérisé en ce que** le trou (20) borgne présente un diamètre compris entre 4mm et 10mm.

8. Dispositif selon l'une des revendications 1 à 7, **caractérisé en ce que** le support présente une épaisseur comprise entre 4mm et 10mm.

9. Procédé de fabrication d'un dispositif microfluidique tel que défini dans l'une des revendications 1 à 8, ledit dispositif microfluidique comprenant un support (10) réalisé en Cyclo-Oléfine Polymère ou Cyclo-Oléfine Copolymère et doté de deux faces opposées séparées d'une épaisseur constante et dites face supérieure et face inférieure, ledit procédé étant **caractérisé en ce qu'**il comporte les étapes suivantes
- Réalisation d'un trou (20) borgne dans ledit support (10), sur sa face supérieure, sur une profondeur (P) suffisante pour laisser une paroi de fond, ladite paroi de fond se déformant vers le dessus pour former une calotte hémisphérique délimitant un premier espace (13) et un deuxième espace (14),
- Application d'une couche supérieure (100) sur la face supérieure du support pour fermer ledit premier espace (13),
- Application d'au moins une couche inférieure (101, 102) sur la face inférieure du support (10) pour fermer ledit deuxième espace (14),
- Créer un canal d'actionnement (15) découchant dans l'espace supérieur ou dans l'espace inférieur et créer deux canaux microfluidiques (16, 17) débouchant respectivement tous les deux dans l'espace inférieur ou dans l'espace supérieur.

10. Procédé selon la revendication 9, **caractérisé en ce que** le trou (20) borgne est réalisé sur une profondeur (P) adaptée pour laisser la paroi de fond avec une épaisseur de matière comprise entre 40µm et 120µm.

11. Procédé selon l'une des revendications 9 ou 10, **caractérisé en ce que** le trou (20) borgne présente un diamètre (D) compris entre 4mm et 10mm.

12. Procédé selon l'une des revendications 9 à 11, **caractérisé en ce que** le support (10) présente une épaisseur comprise entre 4mm et 10mm.
